# EUROPEAN PATENT APPLICATION

(11) **EP 2 210 489 A1**
(43) Date of publication of application: **28.07.2010**
(21) Application number: 09170397.5
(22) Date of filing: 16.09.2009
(51) Int. Cl.: A01M 1/20

(54) **Device for a delayed dispersion of insecticide and larvicide substances through stagnating water pools**

(30) Priority: 22.01.2009 IT MI20090063
(71) Applicant: Caronni, Adelaide Giuseppina, 20030 Seveso (MI) (IT)
(72) Inventor: Caronni, Adelaide Giuseppina, 20030 Seveso (MI) (IT)
(74) Representative: Cicogna, Franco

(57) **Abstract**

The present invention relates to a device for a delayed dispersion of insecticide and larvicide substances through stagnating waters, which comprises a holding body (1) having at least an open portion holding therein a filling mass (2) comprising a larvicide substance mixed with a soluble substance adapted to operate as a confining barrier of the larvicide substance up to a dissolving of the soluble substance.

## Description

### BACKGROUND OF THE INVENTION

The present invention relates to a device for a delayed dispersion of insecticide and larvicide substances through stagnating water pools.

As is known, mosquitos are a very dangerous vehicle transmitting a series of diseases such as malaria, yellow fever, Nile fever, dengue, encephalitis and filariosis.

The struggle against the mosquito proliferation has a very critic importance in tropical countries for sanitary reasons, but it also represents a continuously increasing practice in temperate climate countries, because of an increasing discomfort caused by tropical species recently settled at high latitudes.

In particular, the so-called "tiger mosquito" (Aedes albopictus) because of it diurnal aggressive habits, and since it is a tropical disease vehicle, is subjected to expensive infestation control campaigns.

A good result of the above campaigns is related to a possibility of eliminating mosquitos at their vital larva stage, which occurs in water stagnating pools even of a small size.

The active principles used at preset for eliminating mosquito larves have low or zero toxicity characteristics for men and vertebrates, but, since said active principles are organic compounds, they are subjected to a natural environmental degradation.

In particular, it is herein possible to mention the IGR (insect grow regulator) and the Bacillus thuringensis (which is a biologic larvicide), all of proved efficiency, but adapted to resist in the environment only of few weeks.

Even if active principles of a longer duration would be found, it would remain the problem of the washing away thereof, because of rain and surface water flowing.

The delicacy of the above mentioned active principles and their meteoric washing away, compels to repeat the antiviral processing on stagnating waters (such as in gully-holes, water pools, vessels, rice-fields) each 3 or 4 weeks, with a self-evident economical waste, and an accidental interruption of the cover causes unforeseen washings away.

Considering that the gully-holes of a small size town exceed the number of 5000, it should be apparent the great organization and economical effort for repeating such a processing for 7 or 8 times through a season, with results which are frequently unsatisfactory.

### SUMMARY OF THE INVENTION

Accordingly, the aim of the present invention is to overcome the above mentioned problem, by providing a device for performing a delayed dispersion of insecticide and larvicide substances in stagnating waters, which provides the possibility of preventing larvae from proliferating, without the need of repeatedly applying an insecticide substance, being said device adapted to deliver active principles for several months after a deposition of said active principles in said stagnating waters, while preventing the larvicide substance from being washed away and degraded.

Within the scope of the above mentioned aim, a main object of the invention is to provide such a device which is very simple construction-wise and inexpensive, and which, in particular, can be individually applied to small size stagnation water places such as gully-holes and tanks, as well as to large stagnation water pools such as rice fields, in a number corresponding to the actual operating capability of the device.

Yet another object of the present invention is to provide such a device which, under a temporary water lacking, is designed for stopping the delivery of the active principle, to start again its action as the water pool or tank is again filled by water, thereby providing, upon installation, a constant protective device for all the larva reproduction season.

Yet another object of the present invention is to provide such a device, which, owing to its specifically designed constructional features, is very reliable and safe in operation.

Yet another object of the present invention is to provide such a device which can be easily made starting from easily available materials and elements and which, moreover, is very competitive from a mere economic standpoint.

According to one aspect of the present invention, the above mentioned aim and objects, as well as yet other objects, which will become more apparent hereinafter, are achieved by a device for a delayed dispersion of insecticide and larvicide substances through water pools, **characterized in that** said device comprises a holding body having at least an open portion holding therein a filling mass comprising a larvicide substance mixed with a soluble substance adapted to operate as a confining barrier for confining said larvicide substance up to a dissolving of said soluble substance.

### BRIEF DESCRIPTION OF THE DRAWINGS

Further characteristics and advantages of the present invention will become more apparent hereinafter from the following detailed disclosure of a preferred, though not exclusive, embodiment of a device for a delayed dispersion of insecticide and larvicide substances through stagnation water, which is illustrated, by way of an indicative, but not limitative, example in the accompanying drawings, where:

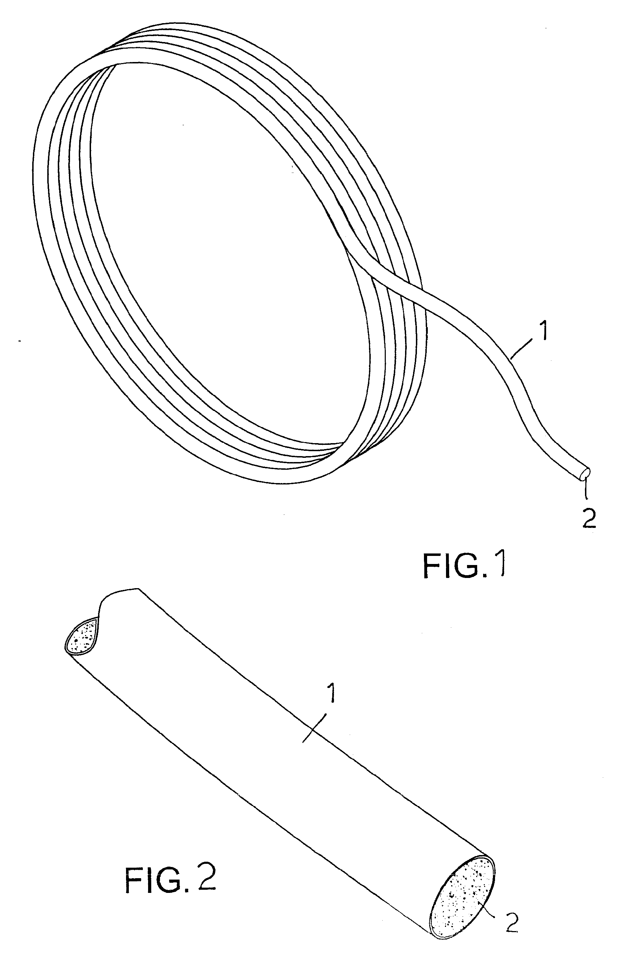

Figure 1 is a schematic perspective view showing the device in a wound coil form;
Figure 2 shows, on an enlarged scale, a length or portion of the device;
Figures 3, 4 and 5 show different cross-section configurations;

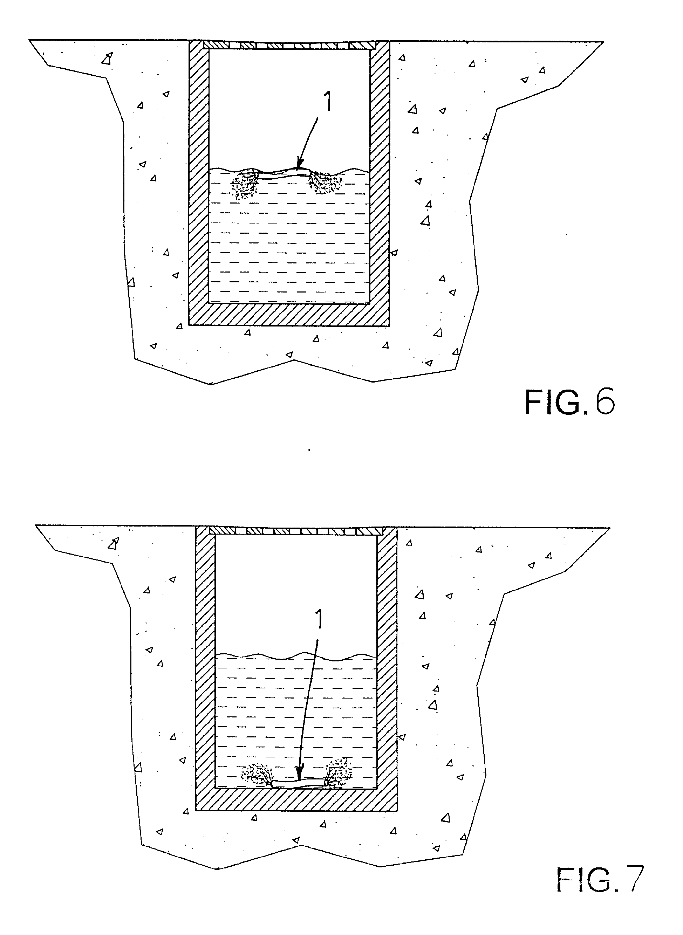

Figure 6 shows a device having floating characteristics, engaged in a gully-hole; and
Figure 7 shows a device, having sinking or settling characteristics, applied to a gully-hole.

### DESCRIPTION OF THE PREFERRED EMBODIMENTS

With reference to the number references of the above mentioned figures, the device according to the invention, comprises a holding body which, advantageously, comprises a tubular element 1, which is preferably of a flexible type and which can be arranged as a coil having any desired lengths.

Inside the holding body 1 is arranged a filling-in mass 2 which is advantageously constituted by a larvicide substance, including granules or agglomerates or spherical, cylindric shape, or having an uneven shape, and being mixed with a soluble substance adapted to operate as a barrier for confining the larvicide substance up to a dissolving of the soluble substance thereof.

The size of the active principle granules or grains may be of an order of millimeters to a micron, being always immersed in a soluble matrix therefor.

By way of an example, the filling-in mass may have a conglomerated arrangement in the case of grained active principle, as well as the aspect of a homogeneous mass in the case in which the grains have a size of the order of microns.

More specifically, the amount of active principle grains comprising said larvicidal substance, dispersed to the soluble substance, will depend on the active principle dissolving speed, so as to allow the overall water mass to be evenly affected in an adapted amount by said active principle.

The embedding soluble substance may comprise water soluble chemical substances, of a non-polluting nature, chosen from inorganic salts, soaps, gels, mineral materials, water soluble organic compounds and mixtures thereof.

The larvicide or insecticide compound preferably comprises an active principle and soluble eccipient or carrier materials, mixed in rates established by the makers, depending on the contingent needs and it would also contain effervescent substance for facilitating an active principle dispersion.

Said active principle can comprise either a natural or a synthetic insecticidal substance, as well as insect destructing spores, enzymes, and larva growth controlling agents.

Thus, said holding body 1 will comprise a tubular element which may be cut to any desired length and has a continuous flexible hose form including an impermeable plastic material, varying thickness walls, for example a film of a micrometric thickness.

The tubular element can also be made as a coating on the filling-in mass, obtained by an extrusion or molding process, thereby, by this approach, it is possible to make, at first, the filling-in mass in a strip form and then by coating the formed filling-in mass by a waterproof plastic material, or a paraffine or resilient paint materials, to provide an impermeable and flexible envelope.

The end form of this article of manufacture could comprise a continuous hose or tube wound on a bobbin therefrom an operator could cut away on the field a tube segment of any desired variable length as necessary for processing a given stagnation water pool.

Likewise, the cutting into segments can also be performed on shop, and it could be possible in this case to package tubular homogeneous length segments, depending on the target active principle duration requirement.

As a non exclusive alternative embodiment, the subject device may also be made with a cylindric or prismatic configuration, by using molds providing a desired final shape to be coated for providing waterproofing properties, and, even in this case open to water at one end only or at its two end portions.

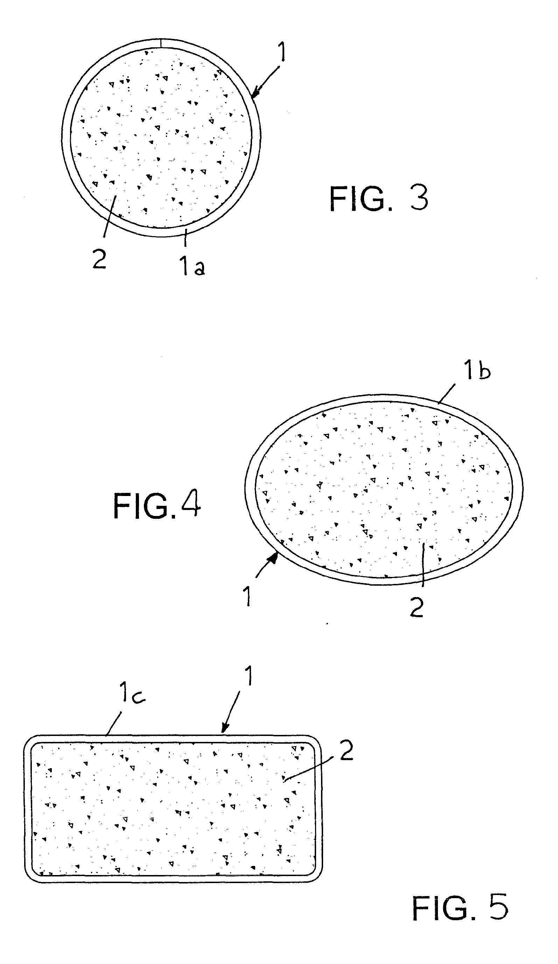

As is shown in figures 3 to 5, the holding body may have a different configuration cross-section.

For example, it could comprise a circular element 1a, an elliptical element 1b or a rectangular element 1c, without excluding other possible patterns.

Advantageously, depending on the use requirements, the device can also include a sinking material or it may have floating properties, by merely adding to the filling-in mass high specific weight substances, for providing a sinking device, or light weight substances, for providing a floating device.

If, because of the active principle characteristics, it is desired to prevent the device from fully sinking, while preventing a possible entrainment of the floating device under water, it is possible to connect a ballast material by a thread having a length of about few centimeters tens, or in other manner connect the thread to a desired part of the stagnation water vessel.

By way of a further example, a device floating inside a gully-hole may be coupled to a grill or a wall.

The device, comprising a tube or hose segments opened at the two end portions thereof, is deposited and left in the place to be processed.

Thus, as water contacts the embedding soluble substance, the active principle grains will start to dissolve, and being progressively consumed.

The amount of said granules will be selected based on the insecticide substance efficiency and biological cycles of the insects to be eliminated, thereby assuring a proper efficiency of the insecticide material, with an even dispersion thereof of a duration of several months or corresponding to the overall summer season.

The operating efficiency of the device, accordingly, will depend on the soluble substance dissolving speed or rate and the length of the tube segment.

From the above disclosure it should be apparent that the invention fully achieves the intended aim and objects.

In particular, it is to be pointed out the great operating and application flexibility of the subject device which can be made by merely cutting a tube length to a preset size, from a continuous coil and a mold.

The invention, as disclosed, is susceptible to several modifications and variations all of which will come within the inventive idea.

Moreover, all the details can be replaced by other technically equivalent elements, according to requirements.

## Claims

1. A device for a delayed dispersion of insecticide and larvicide substances through water pools, **characterized in that** said device comprises a holding body having at least an open portion holding therein a filling mass comprising a larvicide substance mixed with a soluble substance adapted to operate as a confining barrier for confining said larvicide substance up to a dissolving of said soluble substance.

2. A device, according to claim 1, **characterized in that** said holding body comprises a tubular element.

3. A device, according to claim 1, **characterized in that** said tubular element is opened at the two end portions thereof.

4. A device, according to claim 1, **characterized in that** said tubular element is applied as a paste coating forming a filling mass.

5. A device, according to claim 1, **characterized in that** said tubular element is a flexible tubular element.

6. A device, according to claim 1, **characterized in that** said tubular element has a circular cross-section.

7. A device, according to claim 1, **characterized in that** said tubular element has an elliptical cross-section.

8. A device, according to claim 1, **characterized in that** said tubular element has a substantially rectangular cross-section.

9. A device, according to claim 1, **characterized in that** said holding body is of a biodegradable type.

10. A device, according to claim 1, **characterized in that** said device comprises, in said filling mass, a weighting substances.

11. A device, according to claim 1, **characterized in that** said device comprises, in said filling mass, a floating lightening substance.

12. A device, according to claim 1, **characterized in that** said device comprises, in said filling mass, effervescent substances.

13. A device, according to claim 1, **characterized in that** said holding body comprises preselected length holding body sections.
